# EUROPEAN PATENT APPLICATION

(11) **EP 2 033 748 A1**
(43) Date of publication of application: **11.03.2009**
(21) Application number: 07767653.4
(22) Date of filing: 27.06.2007
(51) Int. Cl.: B25J 13/08, G01B 11/24, G06T 1/00

(54) **ROBOT DEVICE AND ROBOT DEVICE CONTROL METHOD**

(30) Priority: 27.06.2006 JP 2006177361
(71) Applicant: Toyota Jidosha Kabushiki Kaisha, Toyota-shi, Aichi-ken 471-8571 (JP)
(72) Inventor: HATTORI, Hirohito, Toyota-shi, Aichi 471-8571 (JP); NAKANO, Yusuke, Toyota-shi, Aichi 471-8571 (JP); MATSUI, Noriaki, Hanamoto-cho Toyota-shi, Aichi 470-0334 (JP)
(74) Representative: Smith, Samuel Leonard
(86) International application number: PCT/JP2007/062850
(87) International publication number: WO 2008/001793

(57) **Abstract**

To make it possible, in a robot apparatus that performs actions in response to external environment, to distinguish the image of a part of its own body contained in three dimensional data of the external environment. A robot 1 includes a visual sensor 101 to visually recognize external environment, an environment restoration portion 102 to create three dimensional data of the external environment based on the information acquired by the visual sensor 101, and a body estimation portion 104 to determine whether or not an image of the body of the robot apparatus 1 is contained in the three dimensional data, and to specify, when the image of the body of the robot apparatus 1 is determined to be contained in the three dimensional data, an area occupied by the image of the body of the robot apparatus 1 in the three dimensional data.

## Description

### Technical Field

The present invention relates to a robot apparatus to perform actions in response to external environment, such as grasping an object, and a method of controlling the same.

### Background Art

Various robot apparatuses such as a robot apparatus to recognize objects existing in working environment and perform grasping actions, and a robot apparatus to autonomously travel in working environment have been proposed in the past. For example, Patent document 1 discloses a robot apparatus that acquires three dimensional data of working environment by using a stereo camera, recognizes the positions and the attitudes of target objects to be grasped existing in the environment from the acquired three dimensional data, and performs grasping actions for these objects.
[Patent Document 1]
Japanese Unexamined Patent Application Publication No. 2004-1122

### Disclosure of the Invention

### Problems to be solved by the Invention

There is a problem in robot apparatuses proposed in the past that perform actions in response to external environment that they cannot determine whether the image of an object contained in the three dimensional data of working environment captured by their own visual sensor such as a stereo camera is the image of a part of their own body or the image of an external object existing in the working environment.

As an example of a robot apparatus for which the effect of this problem is prominent, assume a robot apparatus that performs grasping actions for target objects to be grasped by using an arm potion while evading obstacles existing in working environment. If an image of a part of the body of the robot apparatus is contained in the three dimensional data of external environment when the robot apparatus calculates the movement path of the arm portion for a target object to be grasped based on the three dimensional data, the robot apparatus may recognize that part of the body as an obstacle and create a path that evades that part of the body, though in reality the arm portion can move to the target object to be grasped in a straight line. Therefore, it may not be able to perform optimal operation. Furthermore, it may cause another harmful effect that if the robot apparatus recognizes the arm portion that performs a grasping action as an obstacle, it means that the arm portion already collides with the obstacle, and therefore the robot apparatus cannot calculate the movement path of the arm portion.

The present invention has been made in view of above-mentioned problems, and the object of the present invention is to make it possible, in a robot apparatus that performs actions in response to external environment, to distinguish the image of its own body contained in three dimensional data of external environment.

### Means for solving the Problems

In accordance with a first aspect of the present invention, a robot apparatus to perform actions in response to external environment includes: a visual sensor to visually recognize the external environment; a three dimensional data creating portion to create three dimensional data of the external environment based on the information acquired by the visual sensor; a decision portion to determine whether or not an image of the body of the robot apparatus is contained in the three dimensional data; and an area specifying portion to specify, when the decision portion determines that the image of the body of the robot apparatus is contained in the three dimensional data, the area occupied by the image of the body of the robot apparatus in the three dimensional data. With such a structure, the robot apparatus can distinguish the image of its own body contained in the three dimensional data of external environment. Note that the term "image of body" used in the explanation means an image of a portion of body. Furthermore, an environment restoration portion included in a robot apparatus in accordance with a first embodiment of the present invention (which is explained below) corresponds to the three dimensional data creating portion. Furthermore, a body estimation portion in the first embodiment of the present invention corresponds to the decision portion and the area specifying portion.

Incidentally, the determination by the area specifying portion is preferably carried out by comparing the three dimensional data with a body model of the robot apparatus.

Furthermore, the robot apparatus in accordance with the first aspect of the present invention may further include a calculation portion to calculate the position and the attitude of each of the portions constituting the robot apparatus. At this point, the area specifying portion preferably specifies the area in the three dimensional data to be compared with the body model based on the position and the attitude calculated by the calculation portion. With such a structure, the comparison between the three dimensional data and the body model can be carried out with efficiency.

Furthermore, the robot apparatus in accordance with the first aspect of the present invention may further include an action plan portion to determine the action of the robot apparatus based on the determination result by the area specifying portion and the three dimensional data. With such a structure, the robot apparatus can modify the action of the robot apparatus depending on whether or not the three dimensional data acquired by the visual sensor contains the image of its own body, or carry out other appropriate processes, so that it can improve in diversity of the operation of the robot apparatus.

Furthermore, the robot apparatus in accordance with the first aspect of the present invention may further include a correction portion to remove the image of the body of the robot apparatus from the three dimensional data, and an action plan portion to determine the action of the robot apparatus based on the three dimensional data corrected by the correction portion. With such a structure, the robot apparatus can prevent malfunctions, which are otherwise caused by images of its own body contained in the three dimensional data acquired by the visual sensor.

A method in accordance with a second aspect of the present invention is a method of controlling a robot apparatus that performs actions in response to external environment.
Specifically, it first determines whether or not an image of the body of the robot apparatus is contained in three dimensional data of the external environment. Next, when it is determined that the image of the body of the robot apparatus is contained in the three dimensional data, it specifies the area occupied by the image of the body of the robot apparatus in the three dimensional data. Then, it determines the action of the robot apparatus based on the area detection result and the three dimensional data. With such a method, it can distinguish the image of its own body contained in the three dimensional data of the external environment, modify the action of robot apparatus depending on whether or not the three dimensional data of the external environment contains the image of its own body, and carry out other appropriate processes. Therefore, it can improve in diversity of the operation of the robot apparatus.

A method in accordance with a third aspect of the present invention is a method of controlling a robot apparatus that performs actions in response to external environment. Specifically, it acquires three dimensional data of the external environment and calculates the position and the attitude of the robot apparatus. Next, it selects a target area to be processed from the three dimensional data based on the calculated position and attitude of the body of the robot apparatus, and detects a body area in the three dimensional data where an image of the body of the robot apparatus is contained by comparing the selected target area to be processed and a body model of the robot apparatus. With such a method, it can distinguish the image of its own body contained in the three dimensional data of external environment.

### Advantageous Effects of the Invention

The present invention can provide a robot apparatus capable of distinguishing the image of its own body contained in three dimensional data of external environment, and a method of controlling the same.

### Brief Description of the Drawings

Fig. 1 is an external view of a robot in accordance with a first embodiment;
Fig. 2 is a block diagram showing the internal structure of the robot in accordance with the first embodiment; and
Fig. 3 is a flowchart showing a body estimation process carried out by the robot in accordance with the first embodiment.

### Description of Reference Numerals

- 1: ROBOT
- 10: HEAD PORTION
- 101: VISUAL SENSOR
- 102: ENVIRONMENT RESTORATION PORTION
- 103: ENVIRONMENT DATA STORAGE PORTION
- 104: BODY ESTIMATION PORTION
- 105: CORRECTION PORTION
- 106: PATH PLAN PORTION
- 107: CONTROL PORTION
- 108: ARM DRIVE PORTION
- 11: TORSO PORTION
- 12: ARM PORTION
- 121: UPPER ARM PORTION
- 122: ELBOW JOINT MECHANISM
- 123: FOREARM PORTION
- 124: HAND PORTION
- 50: OBJECT

### Best Modes for carrying Out the Invention

Exemplary embodiments to which the present invention is applied are explained in detail hereinafter with reference to the drawings. The same signs are assigned to the same components throughout the drawings, and duplicated explanation is avoided for the simplification of the explanation as appropriate. Note that in the following exemplary embodiments, the present invention is applied to a robot having an arm portion to grasp an object.

### First embodiment

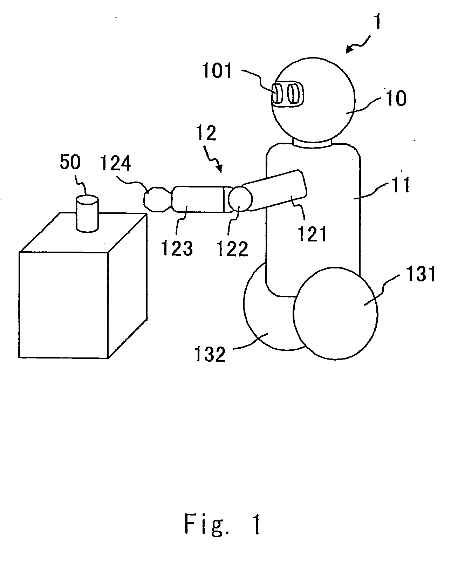

Fig. 1 is an external view of a robot 1 in accordance with an exemplary embodiment of the present invention. The head portion 10 of the robot 1 is equipped with a visual sensor 101 to acquire three dimensional point group data of external environment (which is called "range image data" hereinafter). The head portion 10 is connected to a torso portion 11.
Furthermore, an arm portion 12 is connected to the torso portion 11. In particular, an upper arm portion 121, which is included in the arm portion 12, is connected to the torso portion 11 through a shoulder joint mechanism (not shown), the upper arm portion 121 is connected to a forearm portion 123 through a elbow joint portion 122, and the forearm portion 123 is equipped with a hand portion 124 at the distal end of it. Furthermore, the torso portion 11 is equipped with wheels 131 and 132, which serves as a traveling mechanism of the robot 1.

The robot 1 in accordance with this embodiment acquires range image data by the visual sensor 101, and recognizes the position and the attitude of a target object 50 to be grasped by using the acquired range image data. Next, the robot 1 carries out a path plan to move the arm portion 12 to a position where the arm portion 12 can grasp the recognized object 50, and then grasps the object 50 by the arm portion 12. Incidentally, when the path plan for the arm portion 12 is carried out, the decision whether or not there is any obstacle between the object 50 and the arm portion 12 is made based on the range image data acquired by the visual sensor 101, and the path that reaches the object 50 while avoiding the obstacle is determined. At this point, there is a possibility that the range image data acquired by the visual sensor 101 contains an image of the arm portion 12. In such a case, if the arm portion 12 is recognized as an obstacle, it is impossible to carry out the optimal path plan. Therefore, the robot 1 is equipped with a mechanism to prevent the arm portion 12 from being recognized as an obstacle.

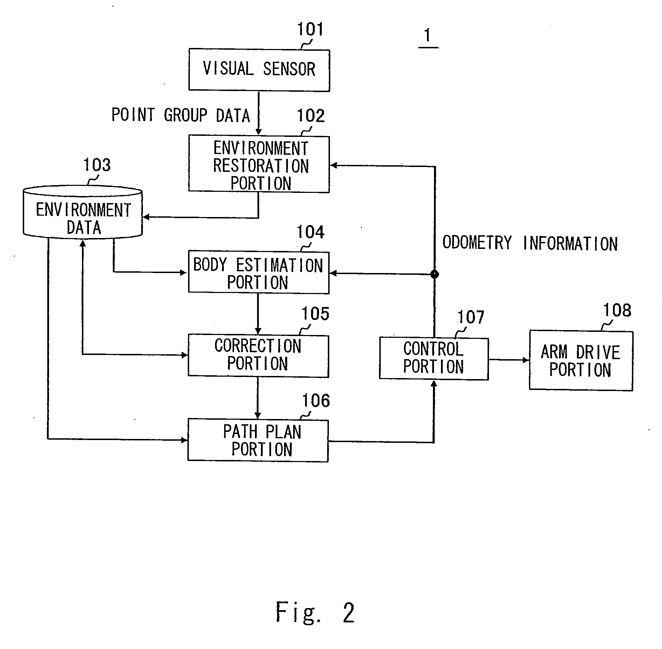

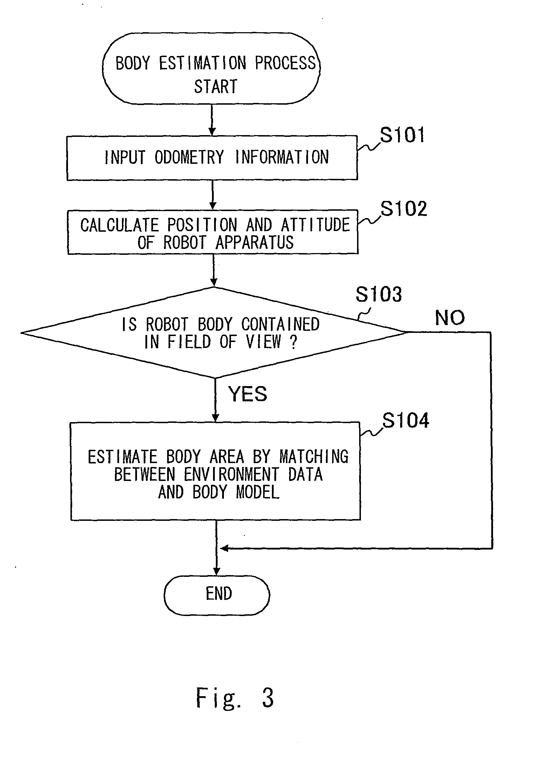

In the following explanation, the grasping action for the object 50 carried out by the robot 1, in particular the mechanism not to recognize the image of the arm portion 12, when such a image is contained in the range image data acquired by the visual sensor 101, as an obstacle is explained in detail with reference to Figs. 2 and 3. The block diagram in Fig. 2 shows the internal structure of the principle portions of the robot 1 that are related to the process to grasp the object 50.

In Fig. 2, the visual sensor 101 acquires three dimensional point group data (range image data) of the external environment of the robot 1 as described above. Specifically, the visual sensor 101 acquires the range image data by using an active range sensor such as a laser range finder. Incidentally, the visual sensor 101 may include plural cameras having image pickup devices such as CCD image sensors or COMS image sensors, and generate the range image data by using the image data captured by these plural cameras. Specifically, the visual sensor 101 detects corresponding points from the image data captured by these plural cameras, and restores three dimensional positions of the corresponding points by stereographic view. At this point, the search for the corresponding points in plural captured images may be carried out by using well-known techniques such as a gradient method using a constraint equation of time-space derivative for the plural captured images and a correlation method.

An environment restoration portion 102 generates triangular polygons by connecting between proximity points of the range image data acquired by the visual sensor 101, and generates polygon data representing the external environment of the robot 1 (which is called "environment data" hereinafter). At this point, the reference frame for the environment data may be a coordinate system fixed on the robot 1, or may be a coordinate system fixed on the environment where the robot 1 exists.

Incidentally, in the case where wide range environment data is generated, the robot 1 acquires several range image data viewed from several different viewpoints by moving the visual sensor 101, i.e., the head portion 10, and generates the environment data based on the integrated range image data generated by integrating these several range image data viewed from the several viewpoints. At this point, the integration of the several range image data viewed from the several viewpoints is carried out by colleting odometry information, i.e., measurement information from a joint angle sensor (not shown) of a neck joint connecting the head portion 10 with the torso portion 11, and by bringing those several range image data in proper alignment with each other based on the angles of the neck joint measured when the visual sensor 101 acquires the range image data. Alternatively, the mutual alignment of the several range image data may be carried out by acquiring corresponding points from the several range image data. The environment data generated by the environment restoration portion 102 is stored to an environment data storage portion 103.

A body estimation portion 104 carries out a process to specify an area of the environment data where the image of the arm portion 12 is contained. In the following explanation, the processing flow of the body estimation portion 104 is explained with reference to the flowchart in Fig. 3.

At a step S101, the odometry information of the robot 1 is inputted from the control portion 107. Note that the odometry information means measurement information from internal sensors such as an encoder (not shown) and a joint angle sensor (not shown) that are provided in the robot 1 to detect the positions, the angles, the velocities, the angular velocities, and the likes of the head portion 10, the arm portion 12, and the wheels 132 and 133 that constitute the robot 1.

At a step S102, the position and the attitude of the robot 1 is calculated by using a body model of the robot 1 and the odometry information supplied from the control portion 107. Note that the body model means a model geometrically representing the body of the robot 1, and is expressed by joints and links connecting between the joints. The body model has the same degrees of freedom and the same constraint conditions as those of the actual robot 1.

At a step S103, the decision whether or not there is an image of the arm portion 12 in the field of view when the range image data is acquired by the visual sensor 101 is made based on the position and the attitude of the robot 1 calculated at the step S102. This decision can be made by determining the intersections between a group of convex polygons formed by the body model and square pyramid shaped polygons created by the field angle of the visual sensor 101.

If it is determined that a part of the body of the robot 1 exists in the field of view, matching between the body model of the robot 1 and the environment data generated by the environment restoration portion 102 is carried out in order to specify the area in the environment data where the image of the arm portion 12 is contained (step S104). Specifically, matching is carried out between three dimensional shape data of the arm portion 12 that is stored in advance in the robot 1 and the environment data in order to specify the area in the environment data where the image of the arm portion 12 is contained. At this point, the matching may be carried out by using well-known image recognition techniques.

Incidentally, it is preferable to roughly estimate the area in the environment data where the image of the arm portion 12 is contained based on the position and the attitude of the robot 1 determined by using the odometry information at the begging of the step S104, and to use this roughly estimated area as the initial value for the matching. It is also possible to scan the entire environment data without establishing the initial value at the beginning of the step S104. However, it is effective because it enables to reduce the area to be scanned and thereby reduce calculation amount, and increase the processing speed of the matching by selecting the area in the environment data for which the matching with the body model must be carried out based on the position and the attitude of the robot 1 determined by using the odometry information.

With reference to Fig. 2 again, the explanation is continued hereinafter. A correction portion 105 corrects the environment data stored in the environment data storage portion 103 in accordance with the processing result of the body estimation portion 104. Specifically, it removes the data corresponding to the area in the environment data which is determined to contain the image of the arm portion 12, so that the arm portion 12 is not detected as an obstacle in a path plan portion 106 (which is explained later).

Incidentally, the purpose of the correction of the environment data by the correction portion 105 is to remove the image of the arm portion 12 from the environment data, so that the range information relating to the arm portion 12 contained in the environment data does not affect the path of the arm portion 12 that is calculated by the path plan portion 106. Therefore, the data correction by the correction portion 105 should preferably be carried out in such a manner that it would be suitable for the process of the path plan portion 106. For example, it may be carried out by removing the data corresponding to the area in the environment data which is determined to contain the image of the arm portion 12, or by replacing that data with the range data of a surrounding area that does not contain the image of the arm portion 12. Alternatively, it may be carried out by creating alternative range data by interpolation from the range data of a surrounding area that does not contain the image of the arm portion 12.

The path plan portion 106 calculates the position and the attitude of an object 50 by comparing the environment data corrected by the correction portion 105 and three dimensional shape data of the object 50, which is stored in the robot 1 in advance. Furthermore, the path plan portion 106 also calculates the positions of obstacles existing between the object 50 and the robot 1 by using the environment data. Furthermore, the path plan portion 106 calculates the movement path of the arm portion 12 to grasp the object 50 while evading the obstacles based on the calculated position and attitude of the object 50 and the calculated positions of the obstacles, and outputs the action information of the arm portion 12 to a control portion 107.

The control portion 107 collects measurement information from internal sensors such as an encoder (not shown) and a joint angle sensor (not shown) that are provided in the robot 1 to detect the positions, the angles, the velocities, the angular velocities, and the likes of the head portion 10, the arm portion 12, and the wheels 132 and 133, and outputs control signals used to drive the head portion 10, the arm portion 12, and the wheels 132 and 133 to drive potions that drive these components.
Furthermore, the control portion 107 also outputs a control signal that is used to operate the arm portion 12 in accordance with the movement path of the arm portion 12 determined by the path plan portion 106 to an arm drive portion 108. The arm drive portion 108 is a drive circuit to operate the actuator of the arm portion 12.

As has been described above, the robot 1 in accordance with this embodiment detects an image of the arm portion 12 existing in the environment data that is generated by using measurement data from the visual sensor 101, and corrects the environment data by removing the image of the arm portion 12 from the environment data. In this way, when the movement path of the arm portion 12 to grasp the object 50 while evading obstacles existing in the environment where the robot 1 is placed is determined, malfunctions, which are otherwise caused by the situation that a part of the body of the robot 1 is recognized as an obstacle, can be prevented.

Furthermore, when the area in the environment data where the arm portion 12 exists is specified only by the odometry information, there is a possibility that error in the determination of the area where the arm portion 12 exists may be increased due to the time difference between the acquisition timing of the range image data from the visual sensor 101 and the acquisition timing of the odometry information of the arm portion 12, or a similar factor. By contrast, the robot 1 in accordance with this embodiment roughly estimates the area containing the image of the arm portion 12 in the environment data based on the position and the attitude of the robot 1 that is specified by using the odometry information, and then specifies the area containing the image of the arm portion 12 in the environment data by carrying out the matching between the body model of the robot 1 and the environment data.
Therefore, it can specify more precisely the area containing the image of the arm portion 12 in the environment data in comparison to the case where only the odometry information is used.

### Other embodiments

In the first embodiment in accordance with the present invention, a configuration in which the area where arm portion 12 exists is detected from the environment data that is represented by polygons created by the range image data acquired from the visual sensor 101 by the body estimation portion 104 is explained. However, the body estimation portion 104 may detect the area where the arm portion 12 exists from the range image data, which is point group data acquired by the visual sensor 101.

Furthermore, the detection to determine whether or not the image of the arm portion 12 is contained in the environment data is carried out in the body estimation portion 104 in the first embodiment in accordance with the present invention.
However, the target object to be detected is not limited to the arm portion 12 of the robot 1, and other parts of the body of the robot 1 may be also detected.

Furthermore, the movement path of the arm portion 12 is determined so as to evade obstacles in the path plan portion 106 in the first embodiment in accordance with the present invention. However, when an obstacle is detected, the grasping operation may be suspended, or an audible alarm or the like may be issued to attract external attention. That is, the subsequent action carried out in response to the detection of an object may be arbitrarily determined.

Furthermore, the robot 1 is equipped with the visual sensor 101 and autonomously acquires the environment data in the first embodiment in accordance with the present invention. However, the range image data may be acquired by a range sensor or the like that is provided externally to the robot 1, and the acquired range image data may be transmitted to the robot 1 through a communication means.

Furthermore, the robot 1 in accordance with the first embodiment of the present invention is described as a robot that performs grasping action for an object 50 while evading obstacles. However, the present invention is not limited to such robots that perform grasping actions, and is applicable to a wide range of robots that perform actions in response to external environment recognized by visual sensors.

Furthermore, the present invention is not limited to above-described embodiments, and various modifications can be possible to the embodiments within the limits within which they do not depart from the gist of the above-described present invention.

### Industrial Applicability

It enables to recognize an image of its own body contained in the three dimensional data of external environment, so that it is applicable to a wide range of robots that perform actions in response to external environment.

## Claims

1. A robot apparatus to perform actions in response to external environment comprising:
a visual sensor to visually recognize the external environment;
a three dimensional data creating portion to create three dimensional data of the external environment based on the information acquired by the visual sensor;
a decision portion to determine whether or not an image of the body of the robot apparatus is contained in the three dimensional data; and
an area specifying portion to specify, when the decision portion determines that the image of the body of the robot apparatus is contained in the three dimensional data, an area occupied by the image of the body of the robot apparatus in the three dimensional data.

2. The robot apparatus according to Claim 1, wherein the determination by the area specifying portion is carried out by comparing the three dimensional data with a body model of the robot apparatus.

3. The robot apparatus according to Claim 2, further comprising a calculation portion to calculate the position and the attitude of the body of the robot apparatus,
wherein the area specifying portion specifies an area of the three dimensional data to be compared with the body model based on the position and the attitude calculated by the calculation portion.

4. The robot apparatus according to any one of Claims 1 to 3, further comprising a action plan portion to determine the action of the robot apparatus based on the determination result by the area specifying portion and the three dimensional data.

5. The robot apparatus according to any one of Claims 1 to 3, further comprising a correction portion to remove the image of the body of the robot apparatus from the three dimensional data; and
an action plan portion to determine the action of the robot apparatus based on the three dimensional data corrected by the correction portion.

6. A method of controlling a robot apparatus that performs actions in response to external environment, comprising:
determining whether or not an image of the body of the robot apparatus is contained in three dimensional data of the external environment;
specifying, when the image of the body of the robot apparatus is determined to be contained in the three dimensional data, an area occupied by the image of the body of the robot apparatus in the three dimensional data; and
determining the action of the robot apparatus based on the area determination result and the three dimensional data.

7. A method of controlling a robot apparatus that performs actions in response to external environment, comprising:
acquiring three dimensional data of the external environment;
calculating the position and the attitude of the robot apparatus;
selecting a target area to be processed from the three dimensional data based on the calculated position and attitude of the body of the robot apparatus; and
detecting a body area in the three dimensional data where an image of the body of the robot apparatus is contained by comparing the selected target area to be processed and a body model of the robot apparatus.

8. The method of controlling according to Claim 7, further comprising:
correcting the three dimensional data based on a detection result of the body area; and
determining the action of the robot apparatus based on the corrected three dimensional data.
